(19) Europäisches Patentamt
European Patent Office
Office européen des brevets

(11) **EP 2 423 773 B1**

(12) # EUROPEAN PATENT SPECIFICATION

(45) Date of publication and mention
of the grant of the patent:
**25.06.2014 Bulletin 2014/26**

(51) Int Cl.:
***G05D 1/06*** *(2006.01)*

(21) Application number: **10382237.5**

(22) Date of filing: **24.08.2010**

(54) **Four-dimensional guidance of an aircraft**

Vierdimensionale Lenkung eines Flugzeugs

Guidage d'un avion en quatre dimensions

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**29.02.2012 Bulletin 2012/09**

(73) Proprietor: **The Boeing Company
Chicago, IL 60606-1596 (US)**

(72) Inventors:
• **Burnside, Kevin
Renton, WA 98056 (US)**

• **Garrido-Lopez, David
28270, Colmenarejo (Madrid) (ES)**
• **Elmer, Kevin
Mission Viejo, CA 92691 (US)**

(74) Representative: **Boult Wade Tennant
Verulam Gardens
70 Gray's Inn Road
London WC1X 8BT (GB)**

(56) References cited:
**EP-A2- 2 154 594          WO-A1-2006/016070
US-A- 4 750 127          US-A- 5 337 982
US-A1- 2003 106 961**

**Description**

<u>Field of the Invention</u>

The present invention relates to methods of controlling the flight path of an aircraft to follow as closely as possible a predetermined four-dimensional flight path. The present invention is particularly useful in flying continuous descent approaches with idle thrust or non-idle thrust.

<u>Background to the Invention</u>

Flight paths are generally calculated in three dimensions, e.g. altitude and lateral position. To calculate a flight path in four dimensions requires the three-dimensional position of the aircraft to be specified over a number of points in time.

The ability to fly an aircraft according to a predetermined flight path with high accuracy such that its position as a function of time is predictable is becoming increasingly important in air traffic control. This would allow air traffic control to relax separations between aircraft, leading to more efficient use of air space.

Although applicable to all phases of aircraft flight, one area that could particularly benefit from an enhanced ability to fly a four-dimensional flight path is in aircraft flying continuous descent approaches into airports. Typically, aircraft will approach an airport under the guidance of air traffic controllers. The air traffic controllers are tasked with ensuring the safe arrival of aircraft at their destination, while also ensuring the capacity of the airport is maximised. The former requirement is generally met by ensuring minimum specified separations are maintained between aircraft. Air traffic control is subject to uncertainties that may act to erode the separation between aircraft such as variable winds, both in speed and direction, and different piloting practices. Nonetheless, large numbers of aircraft can operate safely confined in a relatively small space since air traffic control can correct for these uncertainties at a tactical level using radar vectoring, velocity change and/or altitude change. As a result, a typical approach to an airport will involve a stepped approach where the aircraft is cleared to descend in steps to successively lower altitudes as other air traffic allows.

Air traffic noise around airports has important social, political and economic consequences for airport authorities, airlines and communities. An affordable way to tackle the noise problem in the vicinity of airports is to develop new guidance procedures that reduce the number of aircraft that fly over sensitive areas at low altitude with high thrust settings and/or with non-clean aerodynamic configurations (e.g. with landing gear and/or flaps deployed). Unfortunately, conventional step-down approaches act to exacerbate this problem as aircraft are held at low altitudes, where engine thrust must be sufficient to maintain level flight.

Continuous descent approaches (CDAs) are well known. These approaches see the aircraft approach an airport by descending continuously with the engines set close to idle thrust or, ideally, at idle thrust. Clearly, continuous descent approaches are highly beneficial in terms of noise reduction as they ensure that aircraft are kept as high as possible above sensitive areas while at the same time reducing the noise production at the source through careful use of the engine and flaps. Continuous descent approaches also benefit fuel efficiency, emission of pollutants and reduce flight time.

However, a drawback with continuous descent approaches is a reduction in airport capacity as the rate of landings is lower than with conventional step-down approaches. This is because continuous descent approaches must be planned in detail before commencing the approach and, during the approach, the approach cannot be subjected to tactical corrections to ensure safe aircraft separation like those used in conventional step-down approaches. Also, flying with engines at idle thrust or close to idle thrust means that there is little scope for reducing thrust settings to control separation. To date this has obliged air traffic controllers to impose large spacing requirements between aircraft to guarantee that the aircraft arrive at the airport separated by a safe distance, bearing in mind the potential for reduction in aircraft spacing as approaches are flown due to a result of wind changes and other uncertainties. This increase in separation produces the undesirable reduction in airport capacity.

Despite the many advantages associated with continuous descent approaches, the capacity penalty has prevented their widespread use in airports. To date, continuous descent approaches have mostly been used at airports with low levels of air traffic or at busier airports during quiet times (e.g. at night). Thus, it is desirable to be able to fly continuous descent approaches that minimise uncertainties in the four-dimensional position history of the aircraft. This would allow air traffic controllers to safely reduce the spacing between aircraft, thus satisfying the capacity needs of modern airports.

EP 2,154,594 describes a method of flying an approach using throttle commands to correct for deviations in vertical position and elevator commands to correct for deviations in horizontal position.

<u>Summary of the Invention</u>

Against this background, and according to a first aspect, the present invention resides in a method of guiding an aircraft to follow a predetermined four-dimensional flight path during a descent with a nominal thrust setting corresponding to idle thrust or non-idle thrust. The method comprises monitoring an actual along-track position and an actual vertical position of the aircraft relative to corresponding desired positions on the predetermined flight path. Control commands are generated based on deviations of the actual vertical position of the aircraft from the desired vertical position. Elevator commands are generated based on the deviation of the actual along-track position from the desired along-track position.

Generating control commands is implemented in two different ways depending upon whether the deviation of the actual vertical position from the desired vertical position indicates that the aircraft is too low or too high. If the aircraft is too low, a throttle command is generated and applied that increases the thrust setting to above nominal thrust.

A speed brake command is generated that is applied to deploy the speed brakes when the aircraft is too high. When nominal thrust is idle thrust, the speed brake command is generated whenever the aircraft is determined to be too high. When flying with non-idle thrust, a speed brake command need not be generated for every instance that a determination is made that the aircraft is too high. For example, both a speed brake command and a thrust command may be generated, and the thrust command may be applied to reduce the thrust setting below the nominal setting. This thrust command may set the thrust to idle. In some circumstances, a thrust reduction may be the preferred option. For example, when flying at non-idle thrust, the preference may be first to reduce thrust to idle thrust and only then deploy speed brakes when the desired correction to vertical position will not be met by the thrust reduction alone. In this case, there may be some instances where a determination that the aircraft is too high leads to a thrust command alone with no speed brake command. Alternatively, if it is realised that a suitable reduction in thrust is not available, then just speed brakes may be used. Consequently, the use of speed brakes arises only where the aircraft is flying with thrust so close to idle, that the required reduction in thrust is not available.

The deviation in along-track position may be used in generating the elevator commands alone (e.g. not in generating throttle or speed brake commands). This method is primarily designed to be a vertical navigation method of the aircraft automatically commanded by a flight management computer.

The throttle commands and speed brake commands may then be used to control the throttle(s) and speed brakes of the aircraft respectively, e.g. to adjust the thrust produced from the engines and the aerodynamic drag. The throttle command may cause the thrust setting to increase and stay at the increased setting until a new throttle command issues, or the throttle command may cause the thrust to increase for a predetermined period of time or until a certain increase in total energy is achieved. Alternatively, the throttle command may cause the thrust setting to decrease and stay at the decreased setting until a new throttle command issues, or the throttle command may cause the thrust to decrease for a predetermined period of time or until a certain decrease in total energy is achieved. The speed brake commands, in turn, may be used to deploy the speed brakes. The speed brake command may cause the speed brakes to stay deployed until a new speed brake command issues, or they may cause the speed brake to deploy for a predetermined period of time or until a certain reduction in total energy is achieved. Also, the elevator commands may be used to control the elevator(s) of the aircraft, e.g. to adjust the pitch of the aircraft. The elevator commands may cause the elevators to deflect until a new elevator command issues, or for a predetermined period of time or until a certain change in pitch angle is achieved.

The deviation in along-track position may be calculated in at least two ways. This deviation may be represented as the spatial difference between the actual and desired along-track positions at a particular point in time, e.g. as a distance error. Alternatively, this deviation may be represented as the time difference between when the aircraft actually reaches a point on the predetermined path as compared to the desired time of reaching that point, e.g. how early or late the aircraft is to reach its current position. Either error is to be considered as representing the deviation of the along-track position from the desired along-track position.

Previously, it has been proposed to control along-track position using throttle commands and to control vertical position using elevator commands, for example see US Patent Numbers 6,507,783 and 4,536,843. At face value, this seems sensible as vertical deviations are effectively controlled by elevator, ensuring optimal vertical situation awareness and straightforward compliance with altitude constraints. While US Patent No. 4,764,872 introduces the idea of simultaneously controlling vertical speed and airspeed by supplying the vertical speed command to the auto-throttle system and the airspeed command to the autopilot pitch channel, the present invention appears to turn the more common use of elevators and throttle commands on its head, as elevator commands are used herein to correct deviations in along-track position.

By using elevator commands to control deviations in along track position rather than only using throttle commands, a major benefit results in that the response time of the aircraft to a change in elevator command is typically quicker than the response time of the aircraft to a change in throttle command. As a result, the actual along-track position can be constrained to follow the desired along-track position very closely.

In effect, elevator control is used to correct errors in tracking the desired along-track position by transferring the error to the vertical position. By trading kinetic energy for potential energy in this way, undesired kinetic energy can momentarily be stored in the form of potential energy that, if needed, can be converted back eventually into kinetic energy by elevator actuations. This way, the accuracy of the vertical position is sacrificed to the benefit of accuracy in the along-track position, with enhanced efficiency as the undesired kinetic energy is stored for later use as opposed to dissipated with additional drag, as in previous methods.

It has been found beneficial to provide primary control of the along-track position. Control of the along-track position is achieved using the elevator(s) and without adjusting the throttle(s) because the deviation of along-track position is used in calculating the elevator commands only. Hence, the primary correction is one of a change in elevator command.

To reduce the number of throttle and speed brake commands, it is preferred that these control commands are produced only when the deviation of the vertical position exceeds a threshold. Further details of the thresholds that may be used are given below. Using a threshold means that, should the elevator adjustment lead to the vertical position deviation exceeding the threshold, then throttle commands, speed brake commands, or both are used to control the vertical position. However, rather than trying to correct errors in the vertical position continuously, deviations in the vertical position are tolerated. These small errors are monitored and may indeed stay within tolerable values of their own accord. Nonetheless, should the errors continue to grow, the throttle(s) or the speed brakes may be used to reduce the error. This is achieved by changing the throttle setting or deploying the speed brakes only once the actual vertical position deviates from the desired vertical position by more than the threshold amount.

This is particularly beneficial as it reduces the number of throttle commands issued. In this way, the aircraft can be flown without the need for continuous or even frequent changes to the thrust setting, thereby saving wear and tear of the engine and providing fuel savings. It also provides an effective way of decoupling elevator and throttle control. It has been proven that small corrections of the throttle settings around near-idle thrust values are sufficient to ensure a reasonable vertical confinement of the trajectory.

Moreover, the use of thresholds is also beneficial as it leads to less frequent deployment of the speed brakes. When flying low over the ground, e.g. when on final approach to an airport, deploying the air brakes can cause increased noise to the detriment of those on the ground.

A common threshold maybe used for when the vertical deviation is above and below the desired vertical position. Alternatively, different thresholds may be set.

Elevator commands may be generated based upon deviations in along-track position only. In fact, this has been found to work well where a reasonable tolerance is allowed for deviations in vertical position. However, it has been found that an improvement may be made and this pays particular benefit where there is a greater requirement for the tolerance in deviations in vertical position.

This is because of the slow response time met with throttle commands, e.g. once a new throttle command arises, there is a delay in the engines responding to produce the thrust corresponding to the new throttle setting, and then there is a further delay in the response of the aircraft to the altered throttle setting. This also applies to a lesser extent to deploying the speed brake, e.g. there is an inevitable delay while speed is slowly bled off. These slow response times can be accommodated where in circumstances where there are relaxed vertical position tolerances. However, these slow response times mean that upper and lower thresholds to deviations in vertical position may be repeatedly crossed leading to an oscillatory motion of the aircraft. Although this will not lead to a lack of control, it produces undesirable numbers of throttle changes. This leads to increased wear and tear of the engines and decreased fuel economy.

The improvement sees the control command being generated not just based on the deviation of the actual along-track position from the desired along-track position, but on a combination of the along-track position and the deviation of the actual vertical position from the desired vertical position. In effect, this returns some of the potential error that would otherwise be passed to a deviation in vertical position back to the kinetic energy error in along track position. Hence, some accuracy in along-track position is sacrificed to achieve improved vertical position accuracy so as to meet tighter vertical position requirements.

The elevator commands may be generated based on weighted combinations of the deviations in along-track position and vertical position. Hence, different weights may be given to the contribution from deviations in along-track position and vertical position. This allows a relatively small weighting to be given to the deviation in vertical position, such that deviations in along-track position are allowed to dominate. Thus, control may still be primarily driven to reduce deviations in along-track position.

Having different weights also allows fine tuning of the performance of the guidance system. For example, the method may be tuned to meet a certain vertical position tolerance requirement by weighting the deviation in vertical position contribution relative to the deviation in along-track position accordingly. Thus, just enough accuracy in the along-track position may be sacrificed to meet the vertical position accuracy requirement.

The method may further comprise monitoring the deviation of the actual ground speed of the aircraft relative to a desired ground speed, and adding another term proportional to the ground speed deviation to the weighted combination of deviations in which elevator commands are based. Thus, a term is introduced into the elevator command determination to improve tracking of the desired ground speed. A guidance system results that seeks to minimise a combination of deviations in the along-track position, ground speed and vertical position. As the deviation in ground speed feeds into the elevator command, it forms part of the primary control and may take precedence over deviations in vertical position. As already described above, the precedence may also be promoted by generating elevator commands based on weighted combinations of the deviations in along-track position, vertical position and ground speed. The advantage of using weighted contributions, where the weights of all three contributions may be varied relative to each other, is as already described above.

The method may comprise using an autopilot to modify a calibrated airspeed elevator command based on the deviations of the actual along-track position from the desired along-track position and the actual vertical position from the desired vertical position and, optionally, the actual ground speed from the desired ground speed. The terms may be weighted, in much the same way as described above.

As mentioned above, the method may comprise generating control commands based on deviations of the actual vertical position of the aircraft from the desired vertical position when the actual vertical position differs from the desired vertical position by more than one or more thresholds. The control commands may be used to increase the thrust setting above nominal thrust or to decrease thrust from non-idle thrust, or to deploy speed brakes. The thresholds may be variable such that they are dependent upon the altitude of the aircraft. For example, the thresholds may vary such that they increase with increasing altitude.

Using thresholds that vary with altitude may benefit efficiency of the method, and may also improve flight safety. For instance, the first threshold and/or the second threshold may be set to be larger at a second altitude than they are at a first, lower altitude. In this way, the thresholds may be set to be larger at high altitudes where there is no potential conflict with other airways, and the thresholds may be reduced, e.g. progressively reduced at lower altitudes, which optimises engine use. This may comprise having a continuously variable threshold or banded thresholds, e.g. thresholds taking a certain value in a number of different altitude ranges.

More than a pair of thresholds may be used. For example, two or more thresholds may be used to set throttle levels above idle or to deploy the speed brakes, with appropriate control commands assigned for each threshold. For example, a threshold indicating a larger deviation below the desired vertical position may lead to a larger increase in thrust setting than a threshold indicating a smaller deviation.

After adjusting the thrust setting, the thrust setting may remain at the higher or lower value. While the thrust setting is in this altered state, the method may further comprise continuing to monitor the actual along-track position and the actual vertical position of the aircraft relative to the corresponding desired positions on the predetermined flight path; and generating throttle commands and using the throttle commands to return the thrust setting to idle once the actual vertical position of the aircraft corresponds to the desired vertical position. Consequently, the aircraft's thrust setting is merely changed once to the higher setting and left in that setting until the error has been removed from the vertical position. Once the error is corrected, the thrust setting is merely returned to the nominal value. Advantageously, this results in less frequent changes to the thrust setting.

The nominal throttle setting may be decided beforehand in order to perform guidance reference calculations. The nominal throttle setting is not necessarily a fixed value, but may vary along the planned flight in order to meet constraints. For instance, the nominal throttle setting may take different values for different segments of a descent in order to meet given altitude constraints or given speed constraints (or both).

Many current Flight Management Systems (FMS) calculate descent trajectories at idle thrust whenever possible. Therefore selecting idle thrust as the nominal throttle setting has the advantage that the current FMS-calculated trajectories can be readily used as the nominal trajectory.

The altered throttle setting may be pre-determined for a given aircraft or may be calculated simultaneously during flight, or "on-the-fly". For instance, depending on current gross weight and current flight path angle error, an altered throttle setting may be calculated so as to ensure that the aircraft will cancel out its vertical deviation in a given amount of time assuming that conditions do not change significantly. Hence, the method may comprise calculating the necessary adjusted value of the throttle setting to achieve the desired vertical position. Preferably, calculations of throttle commands are limited such that the throttle setting is kept within an upper limit.

After issuing a speed brake command, the speed brakes are preferably deployed for a predetermined period of time before automatically retracting. Optionally, while the speed brakes are deployed, the method comprises continuing to monitor the actual along-track position and the actual vertical position of the aircraft relative to the corresponding desired positions on the predetermined flight path, and generating speed brake commands and using the speed brake commands to retract the speed brakes once the actual vertical position of the aircraft corresponds to the desired vertical position.

The length of time the speed brakes are deployed may be pre-determined or may be calculated on-the-fly. For instance, the speed brakes may be deployed for a period of time to give rise to a rate of total energy reduction to ensure that the aircraft will cancel out its vertical deviation in a given amount of time. Hence, the method may comprise calculating the necessary period of time to achieve the desired vertical position.

The method may comprise generating control commands based on predictions of deviations of the actual vertical position of the aircraft from the desired vertical position. For example, the method may comprise repeatedly calculating a predicted deviation in vertical position by: calculating the current deviation of actual vertical position from the desired vertical position, calculating the rate of change of the deviation in vertical position, multiplying the rate of change by a prediction time span, and adding the so-multiplied rate of change to the current deviation in vertical position thereby obtaining the predicted deviation in vertical position; and generating a throttle command, a speed brake command, or both, based on the predicted deviation in vertical position. Alternatively, a predicted vertical position of the aircraft a certain period of time in the future may be found by determining the rate of change of the actual vertical position, multiplying this rate of change by the certain period of time, and adding the actual vertical position to the product. The predicted deviation in vertical position may then be found by comparing the predicted vertical position to the desired vertical position at the end of the certain period of time.

Also, the method may comprise generating elevator commands based on predictions of deviations of the actual vertical position of the aircraft from the desired vertical position and on deviations of the actual along track position from the desired along track position. Optionally, predictions of deviation of the actual ground speed from the desired ground speed may be used when generating elevator commands. For example, the method may comprise repeatedly calculating a predicted deviation (e.g. in vertical position, along track position and/or ground speed) by: calculating the current deviation of the actual value from the desired value, calculating the rate of change of the deviation, multiplying the rate of change by a prediction time span, and adding the so-multiplied rate of change to the current deviation thereby obtaining the predicted deviation; and generating an elevator command based on the predicted deviation(s). Alternatively, a predicted vertical position, along-track position and/or ground speed of the aircraft a certain period of time in the future may be found by determining the rate of change of the actual value, multiplying this rate of change by the certain period of time, and adding the actual value to the product. The predicted deviation may then be found by comparing the predicted value to the desired value at the end of the certain period of time.

The certain period of time, (e.g. the prediction time span) may be chosen appropriately, and may be the same for the vertical position, along track position and the ground speed or may take the same value for two to all three of these values. Five seconds has been found to work well for any of the vertical position, along track position and the ground speed. With such a prediction time span, the method effectively predicts the deviation in vertical position/along track position/ground speed in five seconds time. This mitigates the slow response time of the aircraft to throttle commands and, to a lesser extent, the slow response to speed brakes. As a result, a better response in the aircraft's behaviour is obtained (e.g. this also helps remove the oscillatory motion of the aircraft around the guidance reference described above that can arise when tight vertical position tolerances are followed).

Many different approaches to generating elevator commands may be adopted without departing from the scope of the present invention. For example, the deviations between along-track position and vertical position (and, as a supplement, ground speed) may be monitored and any deviation (no matter how small) or any deviation in a weighted combination of these deviations (no matter how small), may be corrected by an appropriate elevator command. Alternatively, thresholds may be introduced, such that a command to move the elevator(s) arises only when the deviation exceeds a threshold. The threshold may be set quite low relative to the thresholds for the control commands to ensure that elevator control is invoked in preference to control of thrust/speed brakes. Furthermore, the deviation of the actual along-track position from the desired along-track position may be monitored continuously or at intervals. The intervals may be set as desired.

Issuing elevator commands causes the attitude of the aircraft to change. For example, if the aircraft has been found to have travelled too far along-track, the elevator commands are used to pitch up the nose of the aircraft thereby decreasing the ground speed of the aircraft and causing the aircraft's progress along-track to slow down. The elevator command may be implemented in many different ways. For example, commands may be sent to the elevator(s) to alter the pitch of the aircraft by a set increment. Alternatively, an elevator command may arise that causes a change in the pitch of the aircraft that depends on the size of the deviations. As mentioned above, calibrated air speed (CAS) commands may be generated and provided to the autopilot. The autopilot subsequently generates the necessary elevator commands using the CAS commands. The CAS commands necessary to cancel out along-track position errors may be computed as a function of ground speed error, along-track position error, and current calibrated airspeed (along with additional flight data such as air thermodynamic state and wind data).

In any of the above arrangements, the changes in aircraft configuration arising from elevator settings, throttle settings, and speed brake settings, may be made with respect to other safety features of the aircraft. For example, any thrust setting and speed brake deployment may be modified so as to ensure that the airspeed of the aircraft stays within safe or approved limits, for instance to avoid over-speed, under-speed or stall conditions. Hence, the method may comprise ensuring the CAS commands remain within an upper and lower bound. This may be done by capping the CAS command to an upper value if it would otherwise exceed that value, and limiting the CAS command to a lower value if it would otherwise fall below that value. Also, elevator settings may be modified to ensure that the pitch of the aircraft stays within safe or approved limits, for instance to avoid exceeding a stall angle.

A further safety feature may be included. The method may comprise recalculation of a new vertical path, or reverting to a vertically constrained flight path should the deviation in vertical position exceed a preset threshold. This may allow a threshold to be set to meet a required navigation performance (RNP) for a continuous approach descent. Should the aircraft exceed this RNP, the above described control law may be abandoned in favour of adopting a vertically constrained flight path, possibly at the expense of predictability and thus usually leading to more significant deviations from the predetermined four-dimensional flight path. Alternatively, should the aircraft exceed this RNP, the method may comprise modification of the four-dimensional trajectory by recalculating a new vertical path, using improved predictions. This alternative may require trajectory de-confliction, re-negotiation, and clearance from the specific air traffic service provider in future RNP-based procedures.

The present invention also resides in a flight control computer programmed to implement any of the methods described above. In addition, the present invention resides in an aircraft having such a flight control computer. The flight control computer may be located in or near the cockpit of the aircraft. The present invention also resides in a computer program that, when executed, implements any of the methods described above. The computer program may be stored on machine-readable memory.

Brief Description of the Drawings

In order that the present invention may be more readily understood, preferred embodiments will now be described, by way of example only, with reference to the following drawings in which:

Figure 1 is a schematic block diagram of a method of controlling the flight path of an aircraft according to a first embodiment of the present invention;
Figure 2a is a top view of an aircraft illustrating its along-track position;
Figure 2b is a side view of the aircraft illustrating its vertical position;
Figure 3 is a schematic block diagram of a method of controlling the flight path of an aircraft according to a second embodiment of the present invention;
Figure 4 is a schematic diagram of apparatus operable to control the flight path of an aircraft according to an embodiment of the present invention;
Figure 5 is a schematic block diagram of a method of controlling the flight path of an aircraft according to a third embodiment of the present invention;
Figure 6 is a schematic diagram of an autopilot signal generator for use with embodiments of the present invention;
Figure 7 is a schematic block diagram of a method of controlling the flight path of an aircraft according to a fourth embodiment of the present invention; and
Figure 8 is a schematic diagram of an alternative autopilot signal generator that is similar in some respects to the one shown in Figure 6.

Detailed Description of the Invention

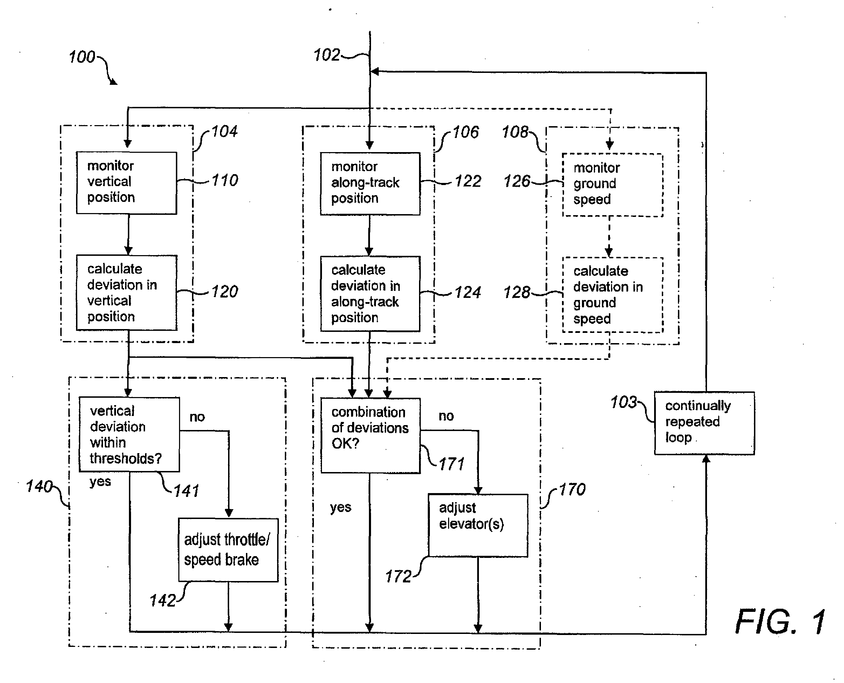

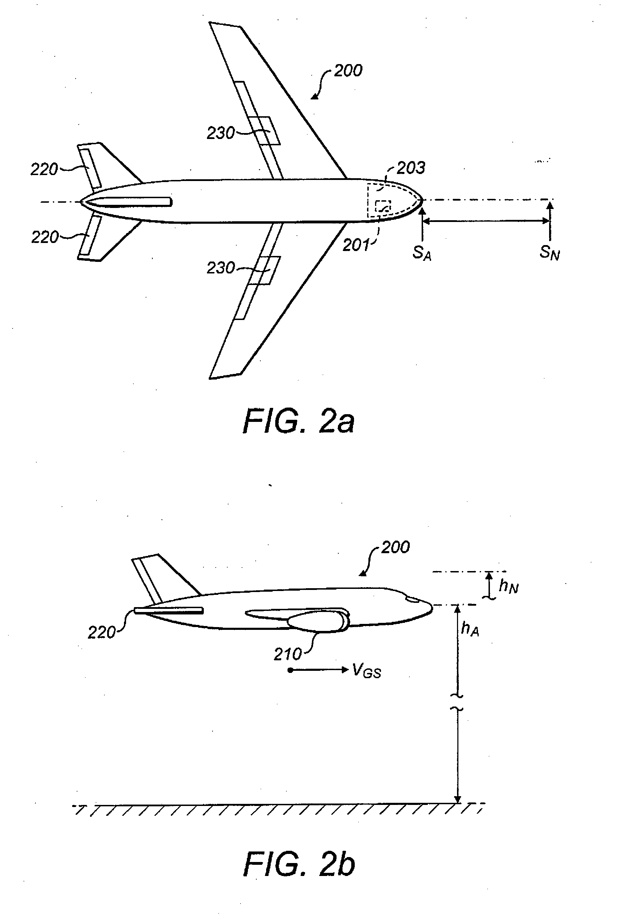

A method of controlling an aircraft 200 (Figure 2) to follow a predetermined four-dimensional flight path is shown at 100 in Figure 1. The method begins at 102 and proceeds in parallel to two processes, 104 and 106. A third parallel process is shown at 108 that may or may not be used in the method.

Parallel process 104 is concerned with the vertical position of the aircraft 200, parallel process 106 is concerned with the along-track position of the aircraft 200, and parallel process 108 is concerned with the ground speed of the aircraft 200. An indicated by the dashed lines, the third parallel process 108 may or may not be included in the method. The method shown in Figure 1 may be practiced with a consideration of the vertical position and along-track position alone. In the following description, it will be assumed that the ground speed is considered.

The parallel process 104 that is concerned with the vertical position of the aircraft 200 will be considered first. The vertical position of an aircraft 200 is illustrated in Figure 2b. At 110, the aircraft's vertical position is monitored. That is to say, the current vertical position of the aircraft 200 is determined. The vertical position may be monitored so that its value is determined every 0.1 seconds, for example. Preferably, the vertical position is monitored of the order of once per second or faster. At 120, the determined vertical position is compared to the desired vertical position at that time to establish the deviation in vertical position.

In the second parallel process 106, the along-track position of the aircraft 200 is monitored at 122. The along-track position of the aircraft 200 is illustrated in Figure 2a. That is to say, the current along-track position of the aircraft 200 is determined. This may be monitored so that its value is determined every 0.1 seconds, for example. Preferably, the along-track position is monitored of the order of once per second or faster. At 124, the determined along-track position is compared to the desired along-track position for that time and the deviation in along track position is determined.

In the third parallel process 108, the ground speed position of the aircraft 200 is monitored at 126. The ground speed $V_{GS}$ of the aircraft 200 is illustrated in Figure 2b. This may be monitored so that its value is determined every 0.1 seconds, for example. Preferably, the ground speed is monitored of the order of once per second or faster. At 128, the determined ground speed is compared to the desired ground speed for that time (or position) and the deviation in ground speed is determined.

The deviations in vertical position, along-track position and ground speed found at steps 120, 124 and 128 are used in two parallel processes 140 and 170.

An adjust control process 140 starts at step 141 where the deviation in vertical position calculated at step 120 is received. As step 141, the deviation in vertical position is assessed to see whether or not it is acceptable. For example, the deviation in vertical position is compared to upper and lower limits corresponding to upper and lower control thresholds. The upper and lower control thresholds may be set to the same or different values. For example, both thresholds may be set to 100 feet or 200 feet.

If the deviation in vertical position is found to be within the thresholds, the method follows a return loop 103 to return to monitoring processes 104, 106 and 108. The return loop 103 ensures that the method 100 executes continually, e.g. repeatedly loops over a specified time. For example, the method 100 may repeat all the while the aircraft 200 is performing a continuous descent approach. The return loop 103 may include means to ensure that the pair of parallel processes 140 and 170 remain in time, e.g. that both processes are completed before the next iteration begins.

Returning to the consideration of vertical deviation at step 141, if the deviation in vertical position is found to be outside a control threshold, the method continues to an adjust throttle/speed brake procedure at 142. The adjust throttle/speed brake procedure 142 sees either the throttle(s) setting increased to vary the thrust level of the engines 210 or the speed brake(s) 230 deployed to slow the aircraft 200 in response to the deviation in vertical position. For example, if the deviation is found to indicate that the aircraft 200 is too high, the speed brakes 230 are deployed. If the deviation is found to indicate that the aircraft 200 is too low, the throttle setting is increased. The response of the aircraft 200 is then monitored and the throttle setting/speed brakes are returned to their nominal setting once the actual vertical position returns to the desired vertical position, as will be described in more detail below. Once the adjust control procedure at 142 has completed, the method continues to the return loop 103.

An adjust elevator(s) process 170 starts at step 171. In its broadest form, process 170 receives only the deviation in along-track position from step 124. However, process 170 may additionally receive the deviation in vertical position from step 120 and/or the deviation in ground speed from step 128, as indicated by the dashed lines in Figure 1. The following describes a preferred embodiment where all three deviations are received from steps 120, 122 and 126.

At step 171, the vertical position, along-track and ground speed deviations are checked to determine whether or not a deviation resulting from a combination of these three deviations is within acceptable values. Alternatively, the three deviations may be checked separately to determine whether any of the deviations are unacceptable. As will be appreciated, where only the deviation in vertical position is being used, a simple comparison of this deviation against a threshold may be performed.

If the combined deviation is found to be acceptable, the method repeats via return loop 103. On the other hand, if the combined deviation is found not to be acceptable, the method continues to an adjust elevator(s) procedure at 172.

At 172, a command is generated to adjust the setting of the elevator(s) 220 so as to correct the unacceptable combined deviation. For example, if the aircraft 200 is found to have progressed too far along-track, an elevator command is generated to cause the nose of the aircraft 200 to pitch up. Once the elevator command has been generated at 172, the method continues to return loop 103.

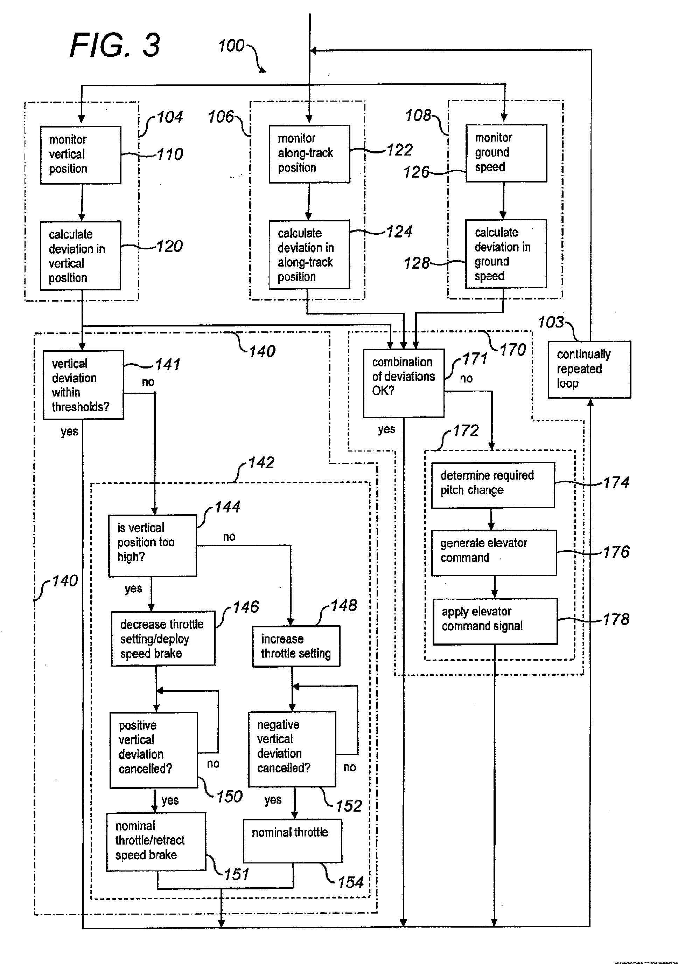

Figure 3 corresponds broadly to Figure 1, where like parts are denoted with like reference numerals. The supplemental ground speed process 108 is included in this Figure and the adjust elevator(s) process 170 uses all three deviations, although it will be understood that these supplemental features may be omitted in some embodiments. In essence, Figure 3 shows the adjust control procedure 142 and the adjust elevator(s) procedure 172 in more detail than Figure 1.

With respect to the adjust control procedure 142, a determination of whether the vertical position is too high is made at 144. If the answer is yes, at 146 the throttle setting is reduced from the nominal setting to a lower value, if possible. If flying at idle thrust, reducing the thrust is not an option. Where throttle reduction is not available or is deemed insufficient to reduce the vertical deviation alone, the speed brake is also deployed. If the answer is no, the throttle setting is increased from the nominal setting to a higher value at 148. However implemented, the throttle setting corresponds to idle thrust or non-idle thrust for the nominal setting. The altered throttle settings may be altered by a variable way, or by a fixed offset. For example, the altered thrust settings may be nominal thrust $\pm$ 1000 lbf (for each engine) for the upper/lower setting. Where the nominal setting is less than 1000 lbf from idle thrust, then the lower thrust setting may be the idle thrust setting. In a typical mid-size passenger jet, 1000 lbf changes in thrust are likely to cause a change in flight path angle of less than one degree. Also, these thrust changes should be able to accommodate wind error intensities up to the order of 50 knots. This tolerance applies to straight flight, and is much reduced for turns. The effects of wind errors when making turns can be mitigated by keeping the turn radius as large as possible. Temperature errors will also cause a deviation in vertical position.

If the throttle setting has been decreased, or the speed brakes have been deployed, or both, at 146, the method continues at 150 where the deviation from the vertical position is determined once more. In this instance, a determination that the positive vertical position error has been removed is required (rather than merely dropping within the throttle-change thresholds). A practical way to verify this is to ask whether the aircraft 200 vertical position deviation returns to zero or negative values. If the aircraft 200 is found still to have a positive deviation in vertical position, the determination of whether the vertical position is acceptable is answered negatively and the method loops back to the determination at 150 as shown. This loop continues until the positive deviation of the vertical position is found to have been cancelled, at which point the method proceeds to step 151 where the throttles are returned to their nominal setting if they were reduced, and the speed brakes are retracted if they had been previously deployed. With this change made, the method continues to the return loop 103.

If the throttle setting has been changed to the upper position at 148, the method continues from step 148 to step 152 where the deviation from the vertical position is determined. In this instance, a determination that the negative vertical position error has been removed is required (rather than merely dropping within the throttle-change thresholds). A practical way to verify this is to ask whether the aircraft's vertical position deviation returns to zero or positive values. If the aircraft 200 is found still to have a negative deviation in vertical position, the determination of whether the vertical position is acceptable is answered negatively and the method loops back to the determination at 152 as shown. This loop continues until the negative deviation of the vertical position is found to have been cancelled, in which case the method proceeds to step 154 where the throttle setting is returned to the nominal (idle) setting. With this change made, the method continues to the return loop 103.

Turning now to the adjust elevator(s) procedure 172, it starts at 174 where the required pitch change is determined. While the elevator command may be generated in a number of ways, in this embodiment the command is generated to cause an increase or decrease in the aircraft's pitch that depends directly on the unacceptable combined deviation. Thus, where a large deviation exists, an elevator command is generated that sees a larger change in the pitch of the aircraft 200 result. Thus, the required change in pitch is determined for the unacceptable combined deviation(s). This may be determined using a look-up table, equation, or any other well-known method. The combined deviation may be formed in any well-known way, e.g. as an addition or a weighted combination.

At 176, the required change in pitch angle determined at 174 is used to generate an appropriate elevator command signal. For example, the size of elevator deflection may be calculated. The so-generated elevator command signal is applied at step 178 for an appropriate length of time to cause the required change in pitch. Thus, the deflection of the elevator(s) 220 changes and thereby the pitch of the aircraft 200 responds to adopt the desired pitch angle. Ensuring the correct pitch angle is reached may be effected in any number of common ways, such as using a feedback loop to control the elevator deflection. With the aircraft 200 set to the desired pitch attitude, the method proceeds to return leg 103, as described above.

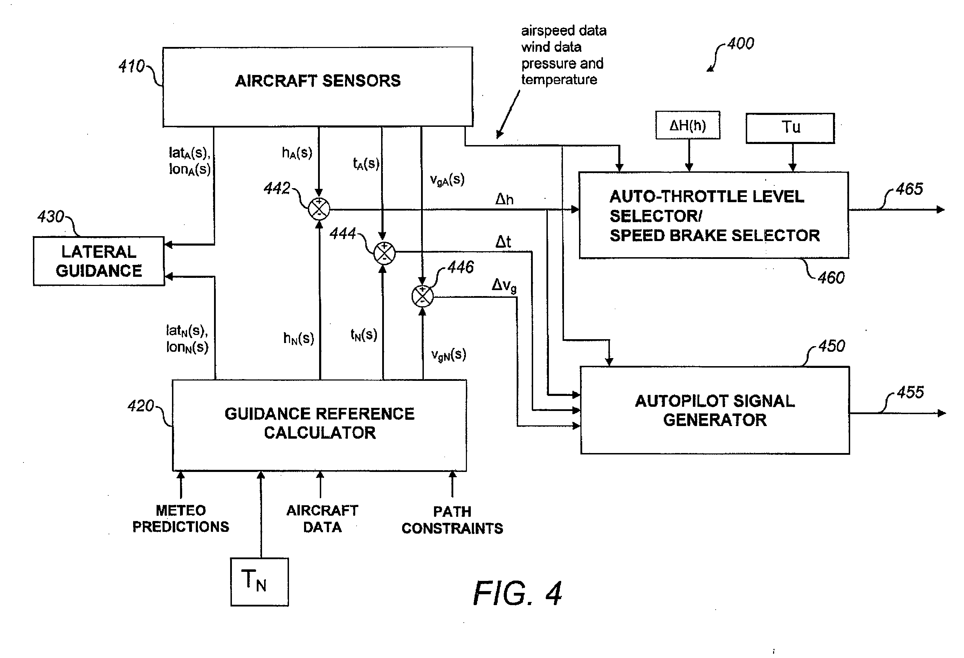

Now that methods of controlling the flight path of an aircraft 200 have been described, systems arranged for putting those methods into effect will be described. Figure 4 is a schematic representation of one such system 400. As previously described, the invention may reside in a flight control computer 201 that is programmed to implement any of the methods and is located in or near the cockpit 203 of the aircraft 200 (see Figure 2).

Aircraft sensors provide data indicative of the position and speed of aircraft 200 to aircraft sensors block 410. For example, the sensors may comprise GPS sensors, inertial navigation systems, altimeters, accelerometers, pressure sensors, etc. The data provided by sensors is used by the aircraft sensors block 410 to generate actual positional information signals for use by other parts within the aircraft 200.

In addition, a guidance reference calculator block 420 is used to generate a nominal four-dimensional flight path to be followed by the aircraft 200. In order to calculate the flight path, the guidance reference calculator block 420 receives a number of inputs including, for example, the pilot's intentions, data relating to performance of the aircraft 200, prevailing and predicted meteorological conditions and path constraints. The aircraft data may include weight, and aerodynamic and propulsive performance. Meteorological conditions may include temperature, pressure and wind profiles. Path constraints may include waypoints, speed and altitude constraints and a cost index. These inputs are used to determine the nominal four-dimensional flight path, and thence to provide desired positional information signals for use by other parts of the aircraft 200.

Dealing first with lateral guidance, the aircraft sensors block 410 generates signals indicating the actual latitude $lat_A(s)$ and the actual longitude $lon_A(s)$ for the current point in time. These signals are provided to a lateral guidance block 430. In addition, the guidance reference calculator block 420 generates signals indicating the desired latitude $lat_N(s)$ and the desired longitude $lon_N(s)$ for the current point in time. The lateral guidance block 430 compares the actual latitude and longitude of the aircraft 200 to the desired values, and uses the control surfaces of the aircraft 200 to follow the nominal lateral path in conventional fashion. Due to the conventional nature of this part of the system, it will not be described further.

Turning now to control of the elevator(s), the actual arrival time at the current along-track position $t_A(s)$, the actual vertical position $h_A(s)$ and the actual ground speed $V_{gA}(s)$ are generated by the aircraft sensors block 410, and the desired arrival time $t_N(s)$, the desired vertical position $h_N(s)$ and the desired ground speed $v_{gN}(s)$ at the current along track position are generated by the guidance reference calculator block 420. The differences between the respective actual and desired values are found at subtractors 442, 444 and 446 to produce a vertical position error $\Delta h$, a time error $\Delta t$ and a ground speed error $\Delta v_g$ respectively. The error signals $\Delta h$, At and $\Delta v_g$ are provided to an autopilot signal generator 450.

The autopilot signal generator 450 takes the error signals, $\Delta h$, $\Delta t$ and $\Delta v_g$, and calculates the required change in the aircraft CAS to correct the errors. This may be achieved, for example, using a feedback control system that receives vertical position error, time error, ground speed error, and current airspeed as inputs, as well as additional flight data that may be necessary for the calculations such as air thermodynamic state and wind data, and in turn calculates corrections to CAS. With the corrected CAS determined, the autopilot signal generator 450 generates a signal 455 representing this CAS and provides it to the autopilot. Then, in conventional fashion, the autopilot responds to the change in CAS signal 455 by commanding actuations of the elevator(s) 220 until the requested CAS is realised.

The autopilot signal generator 450 may receive the aforementioned errors, or in an alternative embodiment, the autopilot signal generator may receive along-track position errors as a function time $\Delta s(t)$, e.g. the spatial difference between the actual and desired along-track positions at a particular point in time. Also, ground speed errors may be received as a function of time, $\Delta v_g(t)$. Additionally, the autopilot signal generator 450 may receive CAS, or any other variable that unambiguously determines the current airspeed of the aircraft 200, as well as additional flight data that may be necessary for the calculations such as air thermodynamic state and wind data.

Turning now to the vertical position, the aircraft sensors block 410 provides a signal $h_A(s)$ representing the actual vertical position of the aircraft 200 at the current along-track position and the guidance reference calculator block 420 provides a signal $h_N(s)$ representing the desired vertical position of the aircraft 200 at the current along-track position. These signals are provided to a subtractor 442 that subtracts one from the other to produce a vertical position error signal $\Delta h$. This error signal $\Delta h$ is provided to an auto-throttle level selector/speed brake selector 460. The auto-throttle level selector/speed brake selector 460 receives further inputs corresponding to a control threshold value $\Delta H(h)$ and the upper throttle settings $T_U$.

The auto-throttle level selector/speed brake selector 460 compares the magnitude of the error signal $\Delta h$ to the control threshold $\Delta H(h)$. If the magnitude of the error signal $\Delta h$ exceeds the throttle change-threshold $\Delta H(h)$ and the error signal $\Delta h$ is positive, this implies that the aircraft 200 is too high and the auto-throttle level selector/speed brake selector 460 responds by generating a deploy speed brake signal 465 that causes the speed brakes to deploy, or to command a lower throttle setting, $T_L$, or both. If the magnitude of the error signal $\Delta h$ exceeds the throttle-change threshold $\Delta H(h)$ and the error signal $\Delta h$ is negative, this implies that the aircraft 200 is too low and the auto-throttle level selector 460 responds by generating an auto-throttle signal 465 corresponding to the upper throttle setting $T_U$.

Whenever the auto-throttle level selector/speed brake selector 460 is producing either the deploy speed brake signal or the throttle setting $T_U$ as the signal 465, the auto-throttle level selector/speed brake selector 460 reverts to monitoring the error signal $\Delta h$ to establish when it reaches zero. Once zero is reached, the signal 465 changes to produce a retract speed brakes signal 465 or an auto-throttle signal 465 that sets the throttles to nominal thrust, or both, as appropriate.

Although not shown, the arrangement of Figure 4 may include override features to ensure that the safety of the aircraft 200 is not compromised. For example, the speed brake/auto-throttle signal 465 and the elevator signal 455 may be filtered through a safety block that ensures that the values remain within safe limits. For example, the values may be checked to ensure that the resulting pitch angle remains within safe limits for the aircraft 200 in its current configuration, that the engines remain operating within recommended limits, or that a change in engine thrust and/or a given elevator command will not cause the airspeed of the aircraft 200 to depart from safe limits. Further details regarding such systems follow.

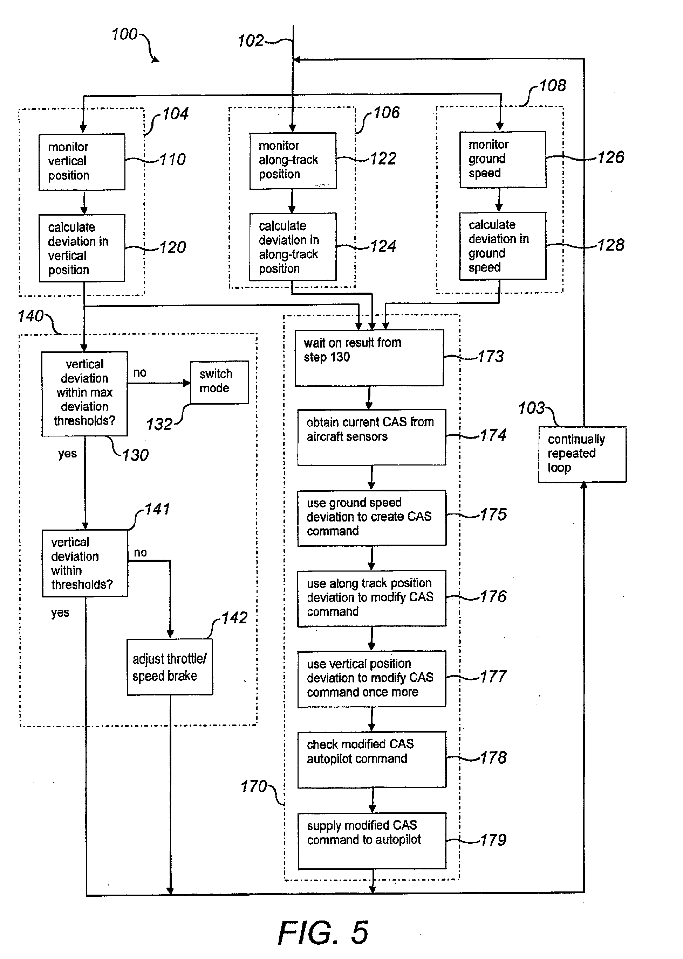

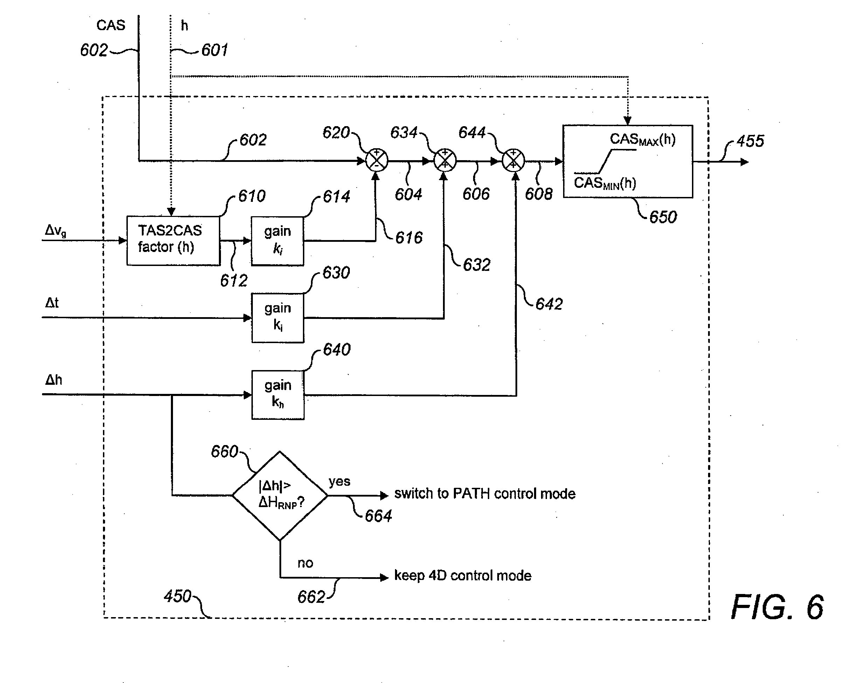

Figure 5 is adapted from Figure 1, and common reference numerals indicate common features. The parallel process 108 is assumed to be present in the method of Figure 5. Hence, Figure 5 shows a method of controlling an aircraft 200 to follow a predetermined four-dimensional flight path. The method is modified to include further safety features. Figure 6 shows an embodiment of the autopilot signal generator 450 of Figure 4 that includes means for effecting the safety features of Figure 5.

Once the deviations in vertical position, along track position and ground speed have been determined at steps 120, 124 and 128, the method continues to step 130. At step 130, the deviation in vertical position is compared to a maximum deviation threshold. For example, the maximum deviation threshold may be some limit imposed by air traffic control. Typically, the maximum deviation threshold will depend upon the manoeuvre being flown. During a continuous descent approach, the maximum deviation threshold may correspond to an imposed required navigation performance (RNP), which may take a value of 200 feet or so. It is stressed that the maximum deviation threshold is not the same as the control threshold. In fact, the control thresholds should be significantly smaller, e.g. 100 feet, as throttle increases and speed brake deployments should generally take effect in order to avoid deviations in the vertical position greater than the maximum deviation threshold.

If, at 130, the determination indicates that the deviation in vertical position has grown to be outside the maximum deviation threshold, the current method of flight guidance 100 is terminated at step 132 where there is a switch mode to either another control law, e.g. one with a vertically constrained path, or the same control law is kept but with a switch to a different nominal trajectory. If the determination at 130 finds that the aircraft 200 is still within the maximum deviation threshold for vertical position deviation, the method continues to step 141. At step 141, the deviation in vertical position is compared with the control thresholds at 142 to determine whether the throttle setting should be increased or decreased, or whether the speed brakes should be deployed, as has been described previously.

The adjust elevator(s) process 170 contains a new first step at 173. Here, a delay is introduced (where required) to ensure that the result of the switch mode determination at step 130 is made before the method can continue to step 174.

At step 174, the aircraft's current CAS is obtained from flight data. The aircraft's current CAS is shown at 602 in Figure 6. At step 175, the deviation in ground speed is used to obtain a new CAS command. The deviation in ground speed is converted to an equivalent deviation in calibrated airspeed by converter 610 as the ratio between calibrated airspeed and true airspeed at the current altitude and airspeed. This may be represented as

$$\Delta CAS_1 \ = \ -k_c \ \cdot \ f(CAS, \ h) \ \cdot \ \Delta v_{GS}(s) \ .$$

The converter 610 thus requires the altitude of the aircraft 200, and the current altitude is provided as indicated at 601. This produces an output 612 that is passed to a multiplier 614 where the deviation in calibrated airspeed is scaled by the gain factor $k_c$ appearing in the above equation. A gain factor of unity has been found to work well, such that the deviation in calibrated airspeed is equal to but of opposite sign to the deviation in ground speed. The scaled deviation in calibrated airspeed 616 is passed to a subtractor 620 where it is subtracted from the aircraft's current CAS 602 to form the new CAS command 604.

The next step in the method 100 is to use the deviation in along-track position to modify the CAS command, as indicated at 176 in Figure 5. In this embodiment, a time error $\Delta t$ is used, e.g. how early or late the aircraft 200 reached its current position. This time error is scaled by multiplier 630 where the time error is multiplied by a gain factor $k_i$. Thus

$$\Delta CAS_2 \ = \ k_i \ \cdot \ \Delta t(s) \ .$$

The gain factor $k_i$ is chosen to be small, such as 1 knot of correction per second of time deviation. This results in a gradual elimination of the time deviation. The scaled time error 632 is passed to an adder 634. Adder 634 adds the scaled timer error 632 to the CAS command 604 to form a once-modified CAS command 606.

The method continues to step 177 where the deviation in vertical position is used to modify the CAS command. As shown in Figure 6, the deviation in vertical height $\Delta h$ is passed to a multiplier 640 where it is multiplied by a gain factor $k_h$ to provide a scaled deviation in vertical position 642. Thus

$$\Delta CAS_3 \ = \ k_h \ \cdot \ \Delta h(s) \ .$$

A value of the order of 1 knot per 50 feet of deviation has been found to be acceptable for $k_h$. The output 642 is passed to an adder 644 where it is added to the once-modified CAS command 606. As a result, the adder 644 produces a twice-modified CAS command 608 as its output.

At step 178, the twice-modified CAS command 608 is checked to ensure it is within desired limits. This is performed by filter 650. Filter 650 compares the twice-modified CAS command 608 to upper and lower limits $CAS_{MAX}(s, h)$ and $CAS_{MIN}(s, h)$. These limits may be chosen as appropriate, and may vary according to the current flying conditions and configuration of the aircraft 200. For example, an upper limit of 340 knots or Mach 0.82 (whichever is less) may be used for a given aircraft, reduced to 250 knots when at an altitude of 10000 feet or less (as is required in European skies). A smooth transition may be implemented between these two upper limits, where the transition varies linearly with altitude. Additionally, a minimum limit equal to the minimum manoeuvre speed for the current configuration of the aircraft 200 may be set.

The twice-modified CAS command is left unaltered if it is within these limits. Alternatively, the filter 650 limits the twice-modified CAS command 608 to whichever limit $CAS_{MAX}(h)$ or $CAS_{MIN}(h)$ is exceeded. The output from filter 650 becomes the CAS command 455 that is provided to the autopilot, as indicated at step 179. The method 100 then repeats via return loop 103.

Thus, the CAS command 455 provided to the autopilot reflects deviations in ground speed, along-track position and vertical position. The relative effect of each deviation may be tailored by appropriate choice of the gain factors $k_c$,

$k_i$ and $k_h$. The method also includes the safety feature of ensuring that the CAS command remains within limits $CAS_{MAX}(h)$ and $CAS_{MIN}(h)$. These limits may reflect the current configuration of the aircraft and the manoeuvre being flown, as is normal for the case of preventing under-speed and over-speed.

Figure 6 also shows a particular implementation of steps 130 and 132 of Figure 5. The deviation in vertical position signal $\Delta h$ is provided to a comparator 660 that checks the deviation against a RNP threshold $\Delta H_{RNP}$. As explained previously, the method 100 continues if the deviation in vertical position is within the RNP threshold as indicated at 662, but switches to an alternative mode at 664 if outside of the RNP threshold.

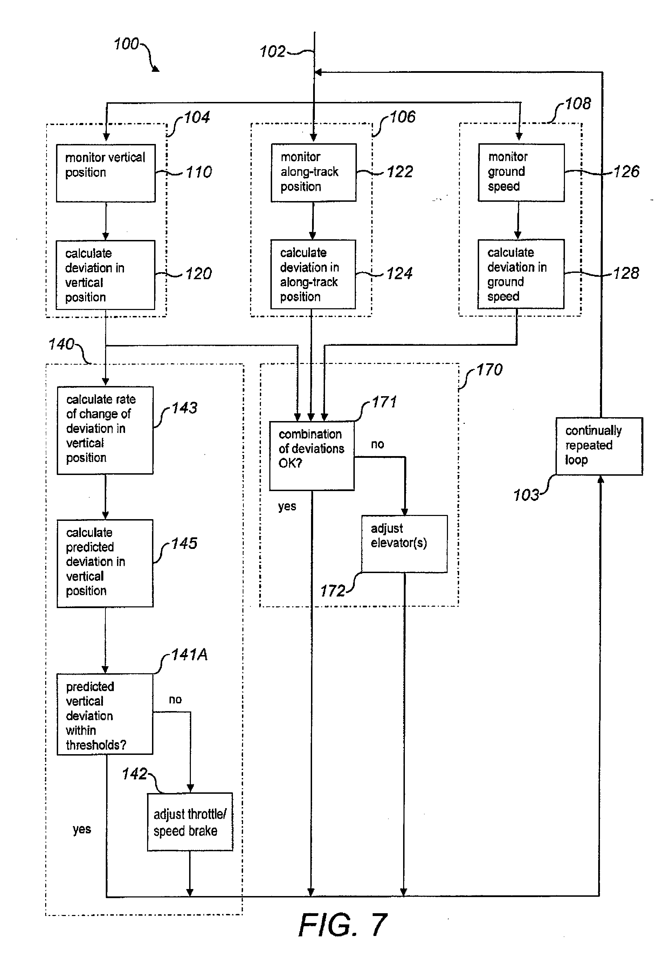

Figure 7 shows a further embodiment of the method 100 of Figure 1. Again, like reference numerals indicate like parts. Figure 7 illustrates an improvement in the adjust control process 140. As before, the vertical position is monitored at step 110 and the deviation in vertical position is calculated at 120. Then, in the adjust control process 140, two further steps are introduced at 143 and 145.

At 143, the rate of change of deviation in vertical position is calculated, e.g. if $\Delta h$ is the deviation, $d\Delta h/dt$ is calculated. Then, at 145, a calculation of a predicted deviation in vertical position is made for a desired time in the future. That is to say, a predicted deviation in vertical position $\Delta h_a$ is calculated from

$$\Delta h_a = \Delta h + \tau\left(\frac{d\Delta h}{dt}\right),$$

where $\tau$ is the required prediction time. A prediction time of five seconds has been found to work well.

Then, at step 141A, it is the predicted deviation in vertical position that is compared to the control thresholds to determine if the throttle command should be changed or the deploy speed brakes command issued at 142. Thus, the moment for which throttles and speed brakes are altered is based on what the deviation in vertical position is expected to be in five seconds time. In this way, better performance is seen as the inevitable delay caused by slow throttle response and slow bleed of energy is anticipated. Thus, the overshoot that would otherwise occur is mitigated. This is particularly advantageous in instances where tight tolerances in vertical position are required. For example, this may be a tight tolerance in the control thresholds, or it may be a tight tolerance in the maximum deviation threshold (that will then require a tight tolerance in the throttle thresholds). By using such a predictive control law, the number of throttle adjustments/speed brake deployments may also be reduced.

When using a prediction of deviation in vertical position, it is considered beneficial to compare the actual deviation in vertical position to a maximum deviation threshold, as illustrated as step 130 in Figure 5, rather than to compare the predicted deviation in vertical position to the maximum deviation threshold.

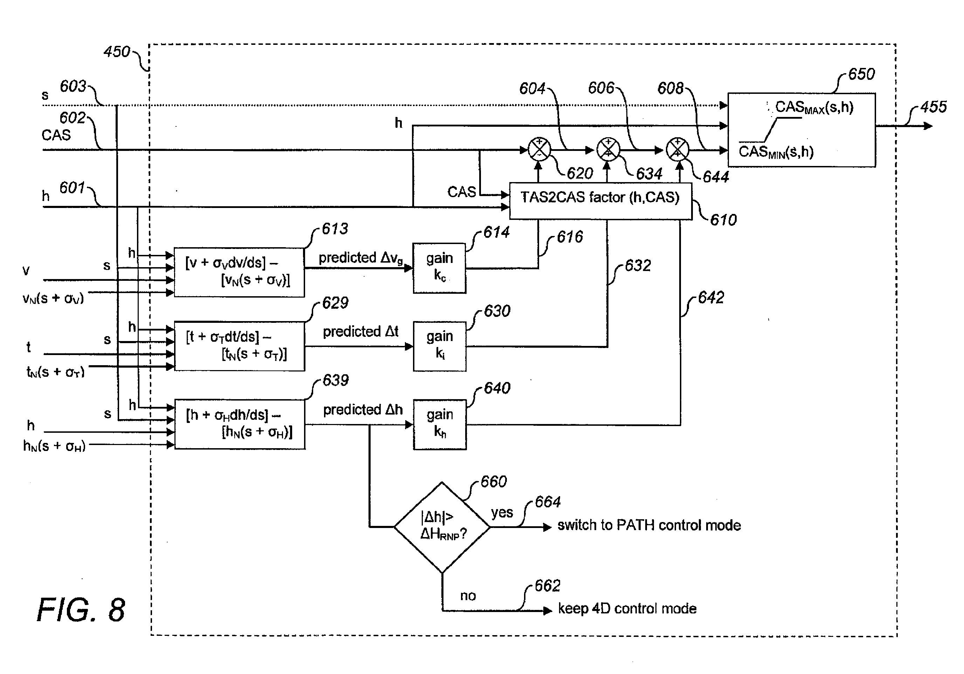

Figure 8 shows an alternative embodiment of the autopilot signal generator 450 of Figure 4. As will be seen, Figure 8 closely resembles Figure 6 (that shows a first embodiment of an autopilot signal generator 450), and common reference numerals indicate common features. The autopilot signal generator 450 of Figure 8 may be used with the method of Figure 5 that shows a method of controlling an aircraft 200 to follow a predetermined four-dimensional flight path. However, the method is adapted to make use of predicted values for the deviations in along track position, vertical position and ground speed. As such, the adjust control step 140 may resemble that shown in and described with respect to Figure 7. However, unlike the method of Figure 7, predicted deviations are used in the adjust elevator(s) process 170 as will now be described.

The adjust elevator(s) process 170 contains a first step at 173 where a delay is introduced (where required) to ensure that the result of the switch mode determination at step 130 is made before the method can continue to step 174.

At step 174, the aircraft's current vertical position h, calibrated airspeed CAS and along track position s is obtained from flight data, as shown in Figure 6 at 601, 602 and 603 respectively.

At step 175, the deviation in ground speed is used to obtain a new CAS command. This may be represented as

$$\Delta CAS_1 = -k_c \cdot f(CAS, h) \cdot \Delta v_{GS}(s + \sigma_v).$$

The calculation starts with the predicted deviation in ground speed being found. The deviation in ground speed is predicted for a future position $s + \sigma_v$, e.g. at a position offset $\sigma_v$ further along the track. A typical value for $\sigma_v$ is 500 metres. This calculation is performed by arithmetic unit 613 that receives as inputs the current height h, the current along track position s, the current ground speed v and the desired ground speed $V_N$ at $(s + \sigma_v)$, e.g. 500 metres from the current position. The arithmetic unit 613 calculates the current rate of change of the ground speed with along track position, multiplies it by the position offset, and adds it to the current ground speed to determine the predicted ground speed at $(s + \sigma_v)$. The desired ground speed is then subtracted to produce the predicted error in ground speed,

$$\Delta v_g = \left[ v + \sigma_v \frac{dv}{ds} \right] - \left[ v_N (s + \sigma_v) \right]$$

Thus, the arithmetic unit 613 produces an output that is passed to a multiplier 614 where the predicted deviation in ground speed is scaled by the gain factor $k_c$ appearing in the above equation. A gain factor of unity has been found to work well. The scaled predicted deviation in ground speed shown at 616 is converted to an equivalent predicted deviation in calibrated airspeed by converter 610 as the ratio between calibrated airspeed and true airspeed at the current altitude and airspeed. The converter 610 thus requires the altitude and airspeed of the aircraft 200, and they are provided as indicated in Figure 8. The scaled predicted deviation in calibrated airspeed 616 is passed to a subtractor 620 where it is subtracted from the aircraft's current CAS 602 to form the new CAS command 604.

The next step in the method 100 is to use a predicted deviation in along-track position to modify the CAS command, as indicated at 176 in Figure 5. In this embodiment, a predicted time error $\Delta t$ is used, e.g. how early or late the aircraft 200 reached its current position. The deviation in the predicted time error is used to obtain a new CAS command. This may be represented as

$$\Delta CAS_2 = -k_i \cdot f(CAS, h) \cdot \Delta t \, (s + \sigma_T).$$

The calculation starts with the predicted time error being found. The time error is predicted for a distance offset $\sigma_T$, e.g. say 500 metres further along track. The distance offset $\sigma_T$ need not be the same as that chosen for the predicted deviation in vertical position ($\sigma_v$). This calculation is performed by a second arithmetic unit, shown at 629, that receives as inputs the current height h, the current along track position s, the current time t and the desired time $t_N$ to arrive at the future position (s + $\sigma_T$), e.g. 500 metres from the current position. The arithmetic unit 629 calculates the current rate of change of the time values with along track position, multiplies it by the distance offset, and adds it to the current time to determine the predicted time of arrival at (s + $\sigma_T$). The desired time of arrival is then subtracted to produce the predicted error in time,

$$\Delta t = \left[ t + \sigma T \frac{dt}{ds} \right] - \left[ t_N (s + \sigma_T) \right]$$

Thus, the arithmetic unit 629 produces an output that is passed to a multiplier 630 where the predicted time error is scaled by the gain factor $k_i$ appearing in the above equation. The gain factor $k_i$ is chosen to be small, such as 1 knot of correction per second of time deviation. A gradual elimination of the time deviation results. The scaled predicted time error 632 is passed to converter 610 that converts the scaled predicted time to an equivalent predicted deviation in calibrated airspeed command. The resulting signal is passed to an adder 634. Added 634 adds the equivalent CAS signal derived from the scaled predicted time error to the CAS command 604 to form a once-modified CAS command 606.

The method continues to step 177 where a predicted deviation in vertical position is used to modify the CAS command 606. The new CAS command may be represented as

$$\Delta CAS_3 = -k_h \cdot f(CAS, h) \cdot \Delta h (s + \sigma_H).$$

The calculation starts with the predicted vertical deviation being found. The vertical deviation is predicted for a future position s + $\sigma_H$, e.g. at a position offset $\sigma_H$ further along the track. A typical value for $\sigma_H$ is 500 metres. The distance offset $\sigma_H$ need not be the same as that chosen for the predicted deviation in vertical position ($\sigma_V$) or time error ($\sigma_T$). This calculation is performed by arithmetic unit 639 that receives as inputs the current height h, the current along track position s, the current vertical position h and the desired vertical position $h_N$ at (s + $\sigma_H$), e.g. 500 metres from the current position. The arithmetic unit 639 calculates the current rate of change of vertical position with along track position, multiplies it by the position offset, and adds it to the current vertical position to determine the predicted vertical position at (s + $\sigma_H$). The desired vertical position is then subtracted to produce the predicted error in vertical position,

$$\Delta h = \left[ h + \sigma_H \frac{dh}{ds} \right] - \left[ h_N(s + \sigma_H) \right]$$

Thus, the arithmetic unit 629 produces an output that is passed to a multiplier 640 where the predicted deviation in vertical position is scaled by the gain factor $k_h$ appearing in the above equation. A value of the order of 1 knot per 50 feet of deviation has been found to be acceptable for $k_h$. The output 642 is passed to a converter 610 where it is converted to an equivalent change in the calibrated airspeed command. The output provided by the converter 610 is passed to an adder 644 where it is added to the once-modified CAS command 606. As a result, the adder 644 produces a twice-modified CAS command 608 as its output.

At step 178, the twice-modified CAS command 608 is checked to ensure it is within desired limits, as was described previously. The twice-modified CAS command is left unaltered if it is within these limits, or is to whichever limit $CAS_{MAX}(s, h)$ or $CAS_{MIN}(s, h)$ is exceeded. The output from filter 650 becomes the CAS command 455 that is provided to the autopilot, as indicated at step 179. The method 100 then repeats via return loop 103.

Similarly to as previously described, the embodiment of Figure 8 also shows a particular implementation of steps 130 and 132 of Figure 5 where the predicted deviation in vertical position signal Δh is provided to a comparator 660 that checks the deviation against a RNP threshold $\Delta H_{RNP}$. The method 100 continues if the deviation in vertical position is within the RNP threshold as indicated at 662, but switches to an alternative mode at 664 if outside of the RNP threshold.

As noted above, the present invention is particularly beneficial when used with flying continuous descent approaches. As an example of a suitable control threshold to apply when monitoring vertical position, 100 feet has been found to provide a good compromise between accuracy of position while avoiding too frequent changes to the throttle setting/deployment of the speed brakes. With a threshold of 100 feet above and below the desired vertical position, it has been found that continuous descent approaches may be flown with typically only a few changes to the throttle setting/speed brakes.

It will be clear to the skilled person that variations may be made to the above embodiments without necessarily departing from the scope of the invention that is defined by the appended claims.

## Claims

1. A method of guiding an aircraft (200) to follow a predetermined four-dimensional flight path during a descent with a nominal thrust setting corresponding to idle thrust or non-idle thrust, the method comprising:

   monitoring an actual along-track position and an actual vertical position of the aircraft relative to corresponding desired positions on the predetermined flight path;
   generating control commands based on deviations of the actual vertical position of the aircraft from the desired vertical position; and
   generating elevator commands based on the deviation of the actual along-track position from the desired along-track position;
   and **characterised in that** generating control commands comprises:

   if the deviation of the actual vertical position from the desired vertical position indicates that the aircraft is too low, generating a throttle command to increase the thrust setting to above nominal thrust; and
   generating a speed brake command to deploy speed brakes (230) when the deviation of the actual vertical position from the desired vertical position indicates that the aircraft is too high.

2. The method of claim 1, comprising generating a throttle command to decrease the thrust setting to below nominal thrust when the deviation of the actual vertical position from the desired vertical position indicates that the aircraft is too high.

3. The method of claim 2 comprising, if the deviation of the actual vertical position from the desired vertical position indicates that the aircraft is too high, generating a throttle command to decrease the thrust setting when flying at non-idle thrust and generating a speed brake command to deploy speed brakes when a determination that reducing thrust alone is insufficient to correct the deviation in vertical position.

4. The method of any preceding claim comprising, if the deviation of the actual vertical position from the desired vertical position indicates that the aircraft is too high, generating throttle commands when the actual vertical position differs from the desired vertical position by more than a first threshold.

5. The method of any preceding claim comprising, if the deviation of the actual vertical position from the desired vertical position indicates that the aircraft is too high, generating speed brake commands when the actual vertical position differs from the desired vertical position by more than a second threshold.

6. The method of any preceding claim, comprising generating throttle commands based on deviations of the actual vertical position of the aircraft from the desired vertical position when the actual vertical position differs from the desired vertical position by more than a common threshold, and generating speed brake commands based on deviations of the actual vertical position of the aircraft from the desired vertical position when the actual vertical position differs from the desired vertical position by more than the common threshold.

7. The method of any preceding claim, further comprising, after altering the thrust setting to above the nominal setting and while the thrust setting is at the altered higher value, continuing to monitor the actual vertical position of the aircraft relative to the desired vertical position; and generating throttle commands and using the throttle commands to return the thrust setting to the nominal thrust setting once the actual vertical position of the aircraft corresponds to the desired vertical position.

8. The method of any preceding claim, further comprising, after deploying speed brakes and while the speed brakes are still deployed, continuing to monitor the actual vertical position of the aircraft relative to the desired vertical position, and generating a speed brake command to retract the speed brakes once the actual vertical position of the aircraft corresponds to the desired vertical position.

9. The method of claim 2 or any of claims 3 to 8 when dependent upon claim 2, further comprising, after altering the thrust setting and while the thrust setting is at the altered lower value, continuing to monitor the actual vertical position of the aircraft relative to the corresponding desired vertical positions, and generating a throttle command to return the thrust setting to the nominal thrust setting once the actual vertical position of the aircraft corresponds to the desired vertical position.

10. The method of any preceding claim, comprising generating elevator commands based on the deviation of the actual along-track position from the desired along-track position and on the deviation of the actual vertical position from the desired vertical position.

11. The method of claim 10, comprising generating elevator commands based on weighted combinations of the deviations in along-track position and vertical position.

12. The method of claim 10 or claim 11, further comprising monitoring the actual ground speed of the aircraft relative to a desired ground speed, and wherein generating elevator commands is further based on the deviation of the actual ground speed of the aircraft from the desired ground speed of the aircraft.

13. The method of claim 12, comprising generating elevator commands based on weighted combinations of the deviations in along-track position, vertical position and ground speed.

14. The method of any preceding claim, comprising using an autopilot to modify a calibrated airspeed command to include terms based on the deviations of the actual along-track position from the desired along-track position, the actual vertical position from the desired vertical position, and the actual ground speed from the desired ground speed.

15. The method of claim 14, comprising generating a calibrated airspeed elevator command that includes weighted terms based on the deviations of the actual along-track position from the desired along-track position, the actual vertical position from the desired vertical position, and the actual ground speed from the desired ground speed, and wherein each term is given a different weight.

16. The method of any preceding claim, comprising generating control commands based on predictions of deviations of the actual vertical position of the aircraft from the desired vertical position.

17. The method of any preceding claim, comprising generating elevator commands based on predictions of deviations of the actual vertical position of the aircraft from the desired vertical position and on predictions of deviations of the actual along track position from the desired along track position.

18. The method of claim 10 or any of claims 11 to 17 when dependent upon claim 10, comprising generating elevator commands based on predictions of deviations of the actual vertical position of the aircraft from the desired vertical position and on predictions of deviations of the actual along track position from the desired along track position.

19. A flight control computer (201) programmed to implement the method of any preceding claim.

20. An aircraft (200) having a flight control computer (201) according to claim 19.

21. A computer program that, when executed, implements the method of any of claims 1 to 18.

**Patentansprüche**

1. Verfahren zum Führen eines Luftfahrzeugs (200) so, dass es während einem Sinkflug mit einer Schubsolleinstellung, die einem Leerlaufschub oder einem Nicht-Leerlaufschub entspricht, einer vorgegebenen vierdimensionalen Flugbahn folgt, wobei das Verfahren aufweist:

Überwachen einer tatsächlichen Kurs-über-Grund-Position und einer tatsächlichen vertikalen Position des Luftfahrzeugs relativ zu den entsprechenden Sollpositionen der vorgegebenen Flugbahn, Erzeugen von Steueranweisungen auf Basis von Abweichungen der tatsächlichen vertikalen Position des Luftfahrzeugs von der vertikalen Sollposition und Erzeugen von Höhenruderanweisungen auf Basis der Abweichung der tatsächlichen Kurs-über-Grund-Position von der Kurs-über-Grund-Sollposition, und **dadurch gekennzeichnet ist, dass** das Erzeugen der Steueranweisungen umfasst:

Erzeugen einer Leistungsanweisung zum Erhöhen der Schubeinstellung auf oberhalb des Sollschubs, wenn die Abweichung der tatsächlichen vertikalen Position von der vertikalen Sollposition anzeigt, dass das Luftfahrzeug zu niedrig fliegt, und Erzeugen einer Luftbremsenanweisung zum Ausfahren von Luftbremsen (230), wenn die Abweichung der tatsächlichen vertikalen Position von der vertikalen Sollposition anzeigt, dass das Luftfahrzeug zu hoch fliegt.

2. Verfahren nach Anspruch 1, das ein Erzeugen einer Leistungsanweisung zum Verringern der Schubeinstellung auf unterhalb des Sollschubs umfasst, wenn die Abweichung der tatsächlichen vertikalen Position von der vertikalen Sollposition anzeigt, dass das Luftfahrzeug zu hoch fliegt.

3. Verfahren nach Anspruch 2, das, falls die Abweichung der tatsächlichen vertikalen Position von der vertikalen Sollposition anzeigt, dass das Luftfahrzeug zu hoch fliegt, ein Erzeugen einer Leistungsanweisung zum Verringern der Schubeinstellung umfasst, wenn nicht mit Leerlaufschub geflogen wird, und ein Erzeugen einer Luftbremsenanweisung zum Ausfahren von Luftbremsen umfasst, wenn festgestellt wird, dass eine Reduzierung des Schubs alleine nicht ausreicht, um die Abweichung in der vertikalen Position zu korrigieren.

4. Verfahren nach einem der vorhergehenden Ansprüche, das, falls die Abweichung der tatsächlichen vertikalen Position von der vertikalen Sollposition anzeigt, dass das Luftfahrzeug zu hoch fliegt, ein Erzeugen von Leistungsanweisungen umfasst, wenn die tatsächliche vertikale Position von der vertikalen Sollposition um mehr als einen ersten Schwellwert abweicht.

5. Verfahren nach einem der vorhergehenden Ansprüche, das, falls die Abweichung der tatsächlichen vertikalen Position von der vertikalen Sollposition anzeigt, dass das Luftfahrzeug zu hoch fliegt, ein Erzeugen von Luftbremsenanweisungen umfasst, wenn die tatsächliche vertikale Position von der vertikalen Sollposition um mehr als einen zweiten Schwellwert abweicht.

6. Verfahren nach einem der vorhergehenden Ansprüche, das ein Erzeugen von Leistungsanweisungen auf Basis von Abweichungen der tatsächlichen vertikalen Position des Luftfahrzeugs von der vertikalen Sollposition umfasst, wenn die tatsächliche vertikale Position von der vertikalen Sollposition um mehr als einen gemeinsamen Schwellwert abweicht, und ein Erzeugen einer Luftbremsenanweisung auf Basis von Abweichungen der tatsächlichen vertikalen Position des Luftfahrzeugs von der vertikalen Sollposition umfasst, wenn die tatsächliche vertikale Position von der vertikalen Sollposition um mehr als den gemeinsamen Schwellwert abweicht.

7. Verfahren nach einem der vorhergehenden Ansprüche, das nach dem Ändern der Schubeinstellung auf oberhalb der Solleinstellung und während sich die Schubeinstellung auf dem geänderten höheren Wert befindet, ferner ein Fortsetzen der Überwachung der tatsächlichen vertikalen Position des Luftfahrzeugs relativ zur vertikalen Sollposition umfasst, sowie ein Erzeugen von Leistungsanweisungen und ein Verwenden der Leistungsanweisungen zum Zurücksetzen der Leistungsanweisung auf die Schubsolleinstellung, sobald die tatsächliche vertikale Position des Luftfahrzeugs der vertikalen Sollposition entspricht.

8. Verfahren nach einem der vorhergehenden Ansprüche, das nach dem Ausfahren der Luftbremsen und während die Luftbremsen ausgefahren sind, ferner ein Fortsetzen der Überwachung der tatsächlichen vertikalen Position des Luftfahrzeugs relativ zur vertikalen Sollposition umfasst, sowie ein Erzeugen einer Luftbremsenanweisung zum Einziehen der Luftbremsen, sobald die tatsächliche vertikale Position des Luftfahrzeugs der vertikalen Sollposition entspricht.

9. Verfahren nach Anspruch 2 oder einem der Ansprüche 3 bis 8, soweit abhängig von Anspruch 2, das nach dem Ändern der Schubeinstellung und während sich die Schubeinstellung auf dem geänderten niedrigeren Wert befindet, ferner ein Fortsetzen der Überwachung der tatsächlichen vertikalen Position des Luftfahrzeugs relativ zu den entsprechenden vertikalen Sollpositionen umfasst, sowie ein Erzeugen einer Leistungsanweisung zum Zurücksetzen der Leistungsanweisung auf die Schubsolleinstellung, sobald die tatsächliche vertikale Position des Luftfahrzeugs der vertikalen Sollposition entspricht.

10. Verfahren nach einem der vorhergehenden Ansprüche, das ein Erzeugen von Höhenruderanweisungen umfasst, die auf der Abweichung der tatsächlichen Kurs-über-Grund-Position von der Kurs-über-Grund-Sollposition sowie der tatsächlichen vertikalen Position von der vertikalen Sollposition basieren.

11. Verfahren nach Anspruch 10, das ein Erzeugen von Höhenruderanweisungen umfasst, die auf gewichteten Kombinationen der Abweichungen von der Kurs-über-Grund-Position und der vertikalen Position basieren.

12. Verfahren nach Anspruch 10 oder 11, das ferner ein Überwachen der tatsächlichen Geschwindigkeit des Luftfahrzeugs über Grund relativ zu einer Sollgeschwindigkeit über Grund umfasst, und worin das Erzeugen von Höhenruderanweisungen ferner auf der Abweichung der tatsächlichen Geschwindigkeit des Luftfahrzeugs über Grund von der Sollgeschwindigkeit des Luftfahrzeugs über Grund basiert.

13. Verfahren nach Anspruch 12, das ein Erzeugen von Höhenruderanweisungen umfasst, die auf gewichteten Kombinationen der Abweichungen von der Kurs-über-Grund-Position, der vertikalen Position und der Geschwindigkeit über Grund basieren.

14. Verfahren nach einem der vorhergehenden Ansprüche, das eine Verwendung eines Autopiloten zum Modifizieren einer berichtigten Fluggeschwindigkeitsanweisung zum Beifügen von Termen umfasst, die auf den Abweichungen der aktuellen Kursüber-Grund-Position von der Kurs-über-Grund-Sollposition, der tatsächlichen vertikalen Position von der vertikalen Sollposition und der tatsächlichen Geschwindigkeit über Grund von der Sollgeschwindigkeit über Grund basieren.

15. Verfahren nach Anspruch 14, das ein Erzeugen einer berichtigten Fluggeschwindigkeitshöhenruderanweisung umfasst, die gewichtete Terme beinhaltet, die auf den Abweichungen der aktuellen Kurs-über-Grund-Position von der Kurs-über-Grund-Sollposition, der tatsächlichen vertikalen Position von der vertikalen Sollposition und der tatsächlichen Geschwindigkeit über Grund von der Sollgeschwindigkeit über Grund basieren, und worin jeder Term anders gewichtet ist.

16. Verfahren nach einem der vorhergehenden Ansprüche, das ein Erzeugen von Steueranweisungen umfasst, die auf Prognosen von Abweichungen der tatsächlichen vertikalen Position des Luftfahrzeugs von der vertikalen Sollposition basieren.

17. Verfahren nach einem der vorhergehenden Ansprüche, das ein Erzeugen von Höhenruderanweisungen umfasst, die auf Prognosen von Abweichungen der tatsächlichen vertikalen Position des Luftfahrzeugs von der vertikalen Sollposition und auf Prognosen von Abweichungen der tatsächlichen Kurs-über-Grund-Position von der Kurs-über-Grund-Sollposition basieren.

**18.** Verfahren nach Anspruch 10 oder einem der Ansprüche 11 bis 17, soweit abhängig von Anspruch 10, das ein Erzeugen von Höhenruderanweisungen umfasst, die auf Prognosen von Abweichungen der tatsächlichen vertikalen Position des Luftfahrzeugs von der vertikalen Sollposition und auf Prognosen von Abweichungen der tatsächlichen Kurs-über-Grund-Position von der Kurs-über-Grund-Sollposition basieren.

**19.** Flugsteuerungscomputer (201), der programmtechnisch zum Ausführen eines Verfahrens nach einem der vorhergehenden Ansprüche eingerichtet ist.

**20.** Luftfahrzeug (200) mit einem Flugsteuerungscomputer (201) nach Anspruch 19.

**21.** Computerprogramm, das bei Ausführung ein Verfahren nach einem der Ansprüche 1 bis 18 zur Anwendung bringt.

## Revendications

**1.** Procédé de guidage d'un aéronef (200) pour suivre un trajet de vol en quatre dimensions prédéterminé pendant une descente avec un réglage de poussée nominale correspondant à une poussée de ralenti ou à une poussée non de ralenti, le procédé comprenant :

la surveillance d'une position longitudinale réelle et d'une position verticale réelle de l'aéronef par rapport à des positions souhaitées correspondantes sur le trajet de vol prédéterminé ;
la génération de commandes de contrôle sur la base des écarts de la position verticale réelle de l'aéronef par rapport à la position verticale souhaitée ; et
la génération de commandes de gouverne de profondeur sur la base de l'écart de la position longitudinale réelle par rapport à la position longitudinale souhaitée ;
et **caractérisé en ce que** la génération de commandes de contrôle comprend :

si l'écart de la position verticale réelle par rapport à la position verticale souhaitée indique que l'aéronef est trop bas, la génération d'une commande des gaz pour augmenter le réglage de poussée au-dessus de la poussée nominale ; et
la génération d'une commande d'aérofreins pour déployer les aérofreins (230) lorsque l'écart de la position verticale réelle par rapport à la position verticale souhaitée indique que l'aéronef est trop haut.

**2.** Procédé selon la revendication 1, comprenant la génération d'une commande des gaz pour diminuer le réglage de poussée au-dessous de la poussée nominale lorsque l'écart de la position verticale réelle par rapport à la position verticale souhaitée indique que l'aéronef est trop haut.

**3.** Procédé selon la revendication 2, comprenant, si l'écart de la position verticale réelle par rapport à la position verticale souhaitée indique que l'aéronef est trop haut, la génération d'une commande des gaz pour diminuer le réglage de poussée lorsqu'il vole avec une poussée non de ralenti et la génération d'une commande d'aérofreins pour déployer les aérofreins lorsqu'il est déterminé que la réduction de la poussée seule est insuffisante pour corriger l'écart de position verticale.

**4.** Procédé selon l'une quelconque des revendications précédentes, comprenant, si l'écart de la position verticale réelle par rapport à la position verticale souhaitée indique que l'aéronef est trop haut, la génération de commandes des gaz lorsque la position verticale réelle diffère de la position verticale souhaitée de plus d'un premier seuil.

**5.** Procédé selon l'une quelconque des revendications précédentes, comprenant, si l'écart de la position verticale réelle par rapport à la position verticale souhaitée indique que l'aéronef est trop haut, la génération de commandes d'aérofreins lorsque la position verticale réelle diffère de la position verticale souhaitée de plus d'un deuxième seuil.

**6.** Procédé selon l'une quelconque des revendications précédentes, comprenant la génération de commandes des gaz sur la base des écarts de la position verticale réelle de l'aéronef par rapport à la position verticale souhaitée lorsque la position verticale réelle diffère de la position verticale souhaitée de plus d'un seuil commun, et la génération de commandes d'aérofreins sur la base des écarts de la position verticale réelle de l'aéronef par rapport à la position verticale souhaitée lorsque la position verticale réelle diffère de la position verticale souhaitée de plus du seuil commun.

7. Procédé selon l'une quelconque des revendications précédentes, comprenant en outre, après la modification du réglage de poussée au-dessus du réglage nominal et alors que le réglage de poussée est à la valeur plus élevée modifiée, la poursuite de la surveillance de la position verticale réelle de l'aéronef par rapport à la position verticale souhaitée ; et la génération de commandes des gaz et l'utilisation des commandes des gaz pour ramener le réglage de poussée au réglage de poussée nominale une fois que la position verticale réelle de l'aéronef correspond à la position verticale souhaitée.

8. Procédé selon l'une quelconque des revendications précédentes, comprenant en outre, après le déploiement des aérofreins et alors que les aérofreins sont encore déployés, la poursuite de la surveillance de la position verticale réelle de l'aéronef par rapport à la position verticale souhaitée, et la génération d'une commande d'aérofreins pour rétracter les aérofreins une fois que la position verticale réelle de l'aéronef correspond à la position verticale souhaitée.

9. Procédé selon la revendication 2 ou l'une quelconque des revendications 3 à 8 lorsqu'elle dépend de la revendication 2, comprenant en outre, après la modification du réglage de poussée et alors que le réglage de poussée est à la valeur plus faible modifiée, la poursuite de la surveillance de la position verticale réelle de l'aéronef par rapport aux positions verticales souhaitées correspondantes, et la génération d'une commande des gaz pour ramener le réglage de poussée au réglage de poussée nominale une fois que la position verticale réelle de l'aéronef correspond à la position verticale souhaitée.

10. Procédé selon l'une quelconque des revendications précédentes, comprenant la génération de commandes de gouverne de profondeur sur la base de l'écart de la position longitudinale réelle par rapport à la position longitudinale souhaitée et de l'écart de la position verticale réelle par rapport à la position verticale souhaitée.

11. Procédé selon la revendication 10, comprenant la génération de commandes de gouverne de profondeur sur la base de combinaisons pondérées des écarts de position longitudinale et de position verticale.

12. Procédé selon la revendication 10 ou la revendication 11, comprenant en outre la surveillance de la vitesse au sol réelle de l'aéronef par rapport à une vitesse au sol souhaitée, et dans lequel la génération de commandes de gouverne de profondeur est en outre basée sur l'écart de la vitesse au sol réelle de l'aéronef par rapport à la vitesse au sol souhaitée de l'aéronef.

13. Procédé selon la revendication 12, comprenant la génération de commandes de gouverne de profondeur sur la base de combinaisons pondérées des écarts de position longitudinale, de position verticale et de vitesse au sol.

14. Procédé selon l'une quelconque des revendications précédentes, comprenant l'utilisation d'un pilote automatique pour modifier une commande de vitesse aérodynamique corrigée pour inclure des termes basés sur les écarts de la position longitudinale réelle par rapport à la position longitudinale souhaitée, de la position verticale réelle par rapport à la position verticale souhaitée, et de la vitesse au sol réelle par rapport à la vitesse au sol souhaitée.

15. Procédé selon la revendication 14, comprenant la génération d'une commande de gouverne de profondeur et de vitesse aérodynamique corrigée qui comprend des termes pondérés basés sur les écarts de la position longitudinale réelle par rapport à la position longitudinale souhaitée, de la position verticale réelle par rapport à la position verticale souhaitée, et de la vitesse au sol réelle par rapport à la vitesse au sol souhaitée, et dans lequel chaque terme reçoit un coefficient de pondération différent.

16. Procédé selon l'une quelconque des revendications précédentes, comprenant la génération de commandes de contrôle sur la base de prédictions d'écarts de la position verticale réelle de l'aéronef par rapport à la position verticale souhaitée.

17. Procédé selon l'une quelconque des revendications précédentes, comprenant la génération de commandes de gouverne de profondeur sur la base de prédictions d'écarts de la position verticale réelle de l'aéronef par rapport à la position verticale souhaitée et de prédictions d'écarts de la position longitudinale réelle par rapport à la position longitudinale souhaitée.

18. Procédé selon la revendication 10 ou l'une quelconque des revendications 11 à 17 lorsqu'elle dépend de la revendication 10, comprenant la génération de commandes de gouverne de profondeur sur la base de prédictions d'écarts de la position verticale réelle de l'aéronef par rapport à la position verticale souhaitée et de prédictions d'écarts de la position longitudinale réelle par rapport à la position longitudinale souhaitée.

19. Ordinateur de commande de vol (201) programmé pour mettre en oeuvre le procédé selon l'une quelconque des revendications précédentes.

20. Aéronef (200) comportant un ordinateur de commande de vol (201) selon la revendication 19.

21. Programme d'ordinateur qui, lorsqu'il est exécuté, met en oeuvre le procédé selon l'une quelconque des revendications 1 à 18.

FIG. 1

FIG. 2a

FIG. 2b

*FIG. 3*    100

*FIG. 4*

*100* *102*

*104* *106* *108*

| monitor vertical position | 110 | | monitor along-track position | 122 | | monitor ground speed | 126 |

| calculate deviation in vertical position | 120 | | calculate deviation in along-track position | 124 | | calculate deviation in ground speed | 128 |

*140*

wait on result from step 130 — 173

vertical deviation within max deviation thresholds? — 130

no → switch mode *132*

yes

obtain current CAS from aircraft sensors — 174

*103*

continually repeated loop

*141*

vertical deviation within thresholds? — 130

no

use ground speed deviation to create CAS command — 175

yes

use along track position deviation to modify CAS command — 176

adjust throttle/ speed brake — *142*

use vertical position deviation to modify CAS command once more — 177

check modified CAS autopilot command — 178

*170*

supply modified CAS command to autopilot — 179

## FIG. 5

FIG. 6

100

102

104

monitor vertical position — 110

106

monitor along-track position — 122

108

monitor ground speed — 126

calculate deviation in vertical position — 120

calculate deviation in along-track position — 124

calculate deviation in ground speed — 128

140

calculate rate of change of deviation in vertical position — 143

170

combination of deviations OK? — 171

no

continually repeated loop

103

yes

calculate predicted deviation in vertical position — 145

adjust elevator(s)

172

141A

predicted vertical deviation within thresholds?

no

142

yes

adjust throttle/ speed brake

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2154594 A
- US 6507783 B
- US 4536843 B
- US 4764872 A